# EUROPEAN PATENT APPLICATION

(11) **EP 3 828 732 A2**
(43) Date of publication of application: **02.06.2021**
(21) Application number: 21163620.4
(22) Date of filing: 19.03.2021
(51) Int. Cl.: G06F 16/36

(54) **METHOD AND APPARATUS FOR PROCESSING IDENTITY INFORMATION, ELECTRONIC DEVICE, AND STORAGE MEDIUM**

(30) Priority: 27.03.2020 CN 202010227289
(71) Applicant: BEIJING BAIDU NETCOM SCIENCE AND TECHNOLOGY CO. LTD., 100085 Beijing (CN)
(72) Inventor: Yang, Shuangquan, Beijing, 100085 (CN); Zhang, Yang, Beijing, 100085 (CN); Liu, Chang, Beijing, 100085 (CN); Xie, Yi, Beijing, 100085 (CN); Zhang, Xueting, Beijing, 100085 (CN); Ji, Kunpeng, Beijing, 100085 (CN); Zheng, Canxiang, Beijing, 100085 (CN)
(74) Representative: Maiwald Patent- und Rechtsanwaltsgesellschaft mbH

(57) **Abstract**

The disclosure discloses a method and an apparatus for processing identity information, an electronic device, and a storage medium. The method includes: obtaining (101) first association relationships between identities and entity objects from a plurality of information sources; establishing (102) a relationship graph corresponding to each information source based on at least one first association relationship obtained from each information source; generating (103) a virtual node associated with at least two entity objects in different relationship graphs based on a space-time distance between respective entity objects; and determining (104) a second association relationship between identities involved in different relationship graphs based on the relationship graphs associated with the virtual node. In this way, not only the accuracy of merging the identities, but also the method may be applied to any scene, thereby avoiding the problem of limited application range of the existing method for merging the identities.

## Description

### FIELD

The disclosure relates to a field of data processing technologies in a field of computer technologies, and particularly relates to a method and an apparatus for processing identity information, an electronic device, and a storage medium.

### BACKGROUND

With the rapid development of science and technology, transportation and communication ways become more and more developed, and connection between people gets closer. Internet, Internet of things, Internet of vehicles and so on go deep into every aspect of people's lives. From online to offline, from a computer device to a mobile phone, from a home smart device to a functional device such as an automobile, the user produces a lot of behaviors in these devices. In addition, these devices have a large number of relationships with other media. Therefore, how to accurately recognize and mine a relationship between two devices, multiple devices, or multiple cross-media identities becomes more and more complicated. A cross-media identity includes a virtual identity (such as network connection information, and virtual account information) and a real identity (such as identity card number information, vehicle information, and face information).

In the related art, a method for merging the cross-media identities mainly includes a way of directly using a static relationship bridging and a mining way based on a rule or a strategy. The way of directly using the static relationship bridging refers to using a unique identity (ID) for bridging to associate user behaviors. The mining way based on a rule or a strategy is mainly to find different identity dimension features of related users based on the user behaviors. However, the existing method for merging the cross-media identities has disadvantages of limited usage scenes and low accuracy of identity merging.

### SUMMARY

The disclosure provides a method and an apparatus for processing identity information, an electronic device, and a storage medium.

A first aspect of embodiments of the disclosure provides a method for processing identity information. The method includes: obtaining first association relationships between identities and entity objects from a plurality of information sources; establishing a relationship graph corresponding to each information source based on at least one first association relationship obtained from each information source; generating a virtual node associated with at least two entity objects in different relationship graphs based on a space-time distance between respective entity objects; and determining a second association relationship between identities involved in different relationship graphs based on the relationship graphs associated with the virtual node.

A second aspect of embodiments of the disclosure provides an apparatus for processing identity information. The apparatus includes: an obtaining module, an establishing module, a generating module, and a determining module. The obtaining module is configured to obtain first association relationships between identities and entity objects from a plurality of information sources. The establishing module is configured to establish a relationship graph corresponding to each information source based on at least one first association relationship obtained from each information source. The generating module is configured to generate a virtual node associated with at least two entity objects in different relationship graphs based on a space-time distance between respective entity objects. The determining module is configured to determine a second association relationship between identities involved in different relationship graphs based on the relationship graphs associated with the virtual node.

A third aspect of embodiments of the disclosure provides an electronic device. The electronic device includes: at least one processor and a memory. The memory is communicatively coupled to the at least one processor. The memory has instructions executable by the at least one processor stored thereon that, when executed by the at least one processor, cause the at least one processor to implement the method for processing the identity information according to the first aspect of embodiments.

A fourth aspect of embodiments of the disclosure provides a non-transitory computer readable storage medium having computer instructions stored thereon. The computer instructions are configured to cause a computer to execute the method for processing the identity information according to the first aspect of embodiments.

An embodiment of the disclosure has following advantages and beneficial effects.

The first association relationships between identities and entity objects are obtained from the multiple information sources. The relationship graph corresponding to each information source is established based on the at least one first association relationship obtained from each information source. The virtual node associated with the at least two entity objects in different relationship graphs is generated based on the space-time distance between respective entity objects. The second association relationship between the identities involved in different relationship graphs is determined based on the relationship graphs associated with the virtual node. In this way, the relationship graphs corresponding to respective information sources are associated by the virtual node, so that the identities involved in different relationship graphs may be associated, which not only improves the accuracy of merging the identities, but also may be applied to any scene, thereby avoiding the problem of limited application range of the existing method for merging the identities.

It should be understood that, contents described in the Summary is not intended to identify key or important features of embodiments of the disclosure, nor is it intended to limit the scope of the disclosure. Other features of the disclosure may become apparent from the following description.

### BRIEF DESCRIPTION OF THE DRAWINGS

The accompanying drawings are used for better understanding the solution and do not constitute a limitation of the disclosure.
FIG. 1 is a flow chart illustrating a method for processing identity information according to Embodiment one of the disclosure.
FIG. 2 is a schematic diagram illustrating cross-media identity information according to an embodiment of the disclosure.
FIG. 3 is a schematic diagram illustrating relationship graphs according to an embodiment of the disclosure.
FIG. 4 is a flow chart illustrating a method for processing identity information according to Embodiment two of the disclosure.
FIG. 5 is a schematic diagram illustrating mapping a relationship graph to a set space-time coordinate system according to an embodiment of the disclosure.
FIG. 6 is a schematic diagram illustrating generating a virtual node according to an embodiment of the disclosure.
FIG. 7 is a flow chart illustrating a method for processing identity information according to Embodiment three of the disclosure.
FIG. 8 is a schematic diagram illustrating generating a connected graph according to an embodiment of the disclosure.
FIG. 9 is a schematic diagram illustrating a connected graph according to an embodiment of the disclosure.
FIG. 10 is a schematic diagram illustrating a breadth-first traversal result according to an embodiment of the disclosure.
FIG. 11 is a flow chart illustrating a method for processing identity information according to Embodiment four of the disclosure.
FIG. 12 is a schematic diagram illustrating mapping a relationship graph to a set space-time coordinate system according to an embodiment of the disclosure.
FIG. 13 is a schematic diagram illustrating merging different relationship graphs according to an embodiment of the disclosure.
FIG. 14 is a flow chart illustrating a method for processing identity information according to Embodiment five of the disclosure.
FIG. 15 is a block diagram illustrating an apparatus for processing identity information according to Embodiment six of the disclosure.
FIG. 16 is a block diagram illustrating an electronic device capable of implementing a method for processing identity information according to an embodiment of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

In the related art, a method of directly using a static relationship bridging to merge cross-media identities requires that all identities have direct or indirect association relationships, and the association relationship is a connected graph. Therefore, there is a problem that a usage scene is limited.

When merging cross-media identities is performed by using a mining method based on a rule or a strategy, the mining method based on a rule is similar to the method of using the static relationship bridging, which has a great limitation. The mining method based on a strategy needs a large number of labeled samples for machine learning or feature mining. However, such large number of real samples do not exist in a real business scene, so the accuracy of machine learning is low.

For the technical problems existing in the related technologies for identity merging, the disclosure provides a method for processing identity information. First association relationships between identities and entity objects are obtained from multiple information sources. A relationship graph corresponding to each information source is established based on at least one first association relationship obtained from each information source. A virtual node associated with at least two entity objects in different relationship graphs is generated based on a space-time distance between respective entity objects. A second association relationship between identities involved in different relationship graphs is determined based on the relationship graphs associated with the virtual node.

Description will be made below to a method and an apparatus for processing identity information, an electronic device, and a storage medium with reference to accompanying drawings.

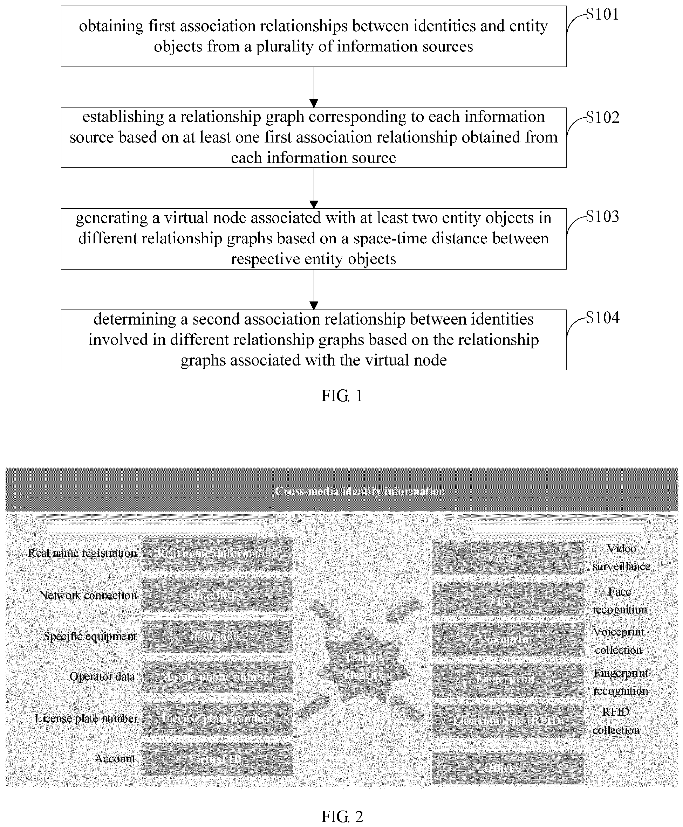

FIG. 1 is a flow chart illustrating a method for processing identity information according to Embodiment one of the disclosure.

Embodiments of the disclosure take that the method for processing the identity information is configured in an apparatus for processing identity information as an example for description. The apparatus for processing identity information may be applied to any electronic device, such that the electronic device may execute a function for processing the identity information.

The electronic device may be a personal computer (PC), a cloud device or a mobile device. The mobile device may be a hardware device having various operating systems, such as a mobile phone, a tablet, a personal digital assistant, a wearable device, or a vehicle-mounted device.

As illustrated in FIG. 1, the method for processing the identity information may include the following.

At block S101, first association relationships between identities and entity objects are obtained from multiple information sources.

The information source who transmits information through a certain material is a birthplace/source of information. For example, the information source may be a financial information platform, a traffic information platform, a video information platform, and so on. It may be understood that each information source is similar to a database for storing a type of information. For example, the traffic information platform, taken as an information source, may store all information collected by a camera on a traffic road.

An entity object refers to an entity which obtains identity information, such as a base station, and a camera.

In embodiments of the disclosure, an identity obtained from the multiple information sources includes a virtual identity (such as network connection information, virtual account information, etc.) and a real identity (such as identity card number information, vehicle information, face information, etc.)

As an example, as illustrated in FIG. 2, the identity information may include the virtual identity and the real identity. The virtual identity may include the network connection information, specific equipment information, virtual ID information, radio frequency identification (RFID) of an electromobile, and so on. The real identity may include real-name registration information, face, voiceprint, fingerprint and so on.

It should be noted that, cross-media identity information in FIG. 2 is merely an exemplary description. Of course, the identity information may also include other information, which is not described here.

It should be explained that, varied data may be obtained from the multiple information sources in the real social scene. The data may include structured data, unstructured data, semi-structured data, and may also include various multi-modal data such as a text, a video, an audio, and an image. In order to build a unified and generalizable system for mining and analyzing a large-scale dynamic relationship, the data obtained from the multiple information sources may be abstracted to determine the first association relationships between the identities and the entity objects.

As a possible implementation, the first association relationships between the identities and the entity objects in the multiple information sources may be constructed in a point-and-edge way. A point represents an identity identifier of a user, or represents other information node associated with the user. An edge represents a direct relationship between the user and other node.

As an example, when corresponding information of a mobile phone is recorded by a certain base station, a group of point-edge relationships (VI: a mobile phone IMEI (international mobile equipment identity), V2: a base station; E: the mobile phone connecting with the base station [time points, frequencies]) may be recorded. An IMEI is an abbreviation of an international mobile equipment identity. Alternatively, when a certain account transfers money to another account, a group of point-edge relationships (VI: an account A, V2: an account B; E: attribute-related information of transferring the money [a time point, a transfer amount, transfer login information]) may also be recorded.

In an embodiment of the disclosure, the first association relationships between the identities and the entity objects obtained from the multiple information sources include a one-to-one relationship, a one-to-many relationship and a many-to-many relationship. For example, one user merely has one identity card number. One user may have multiple mobile phone numbers. One person may be father of multiple persons or a son of his parents.

In an embodiment of the disclosure, there may be a variety of first association relationships between the identities and the entity objects obtained from the multiple information sources. The first association relationships between the identities and the entity objects obtained from different information sources may not belong to the same type of association relationship. For example, the first association relationships between the identities and the entity objects may include a social association relationship, an account association relationship, a behavioral association relationship, a virtual social association relationship, an identity association relationship, and so on.

It should be explained that, the first association relationships between the identities and the entity objects may be obtained from the multiple information sources in the disclosure. For example, data obtained from a public security business platform may restore information of a criminal suspect. A trajectory of a passenger may be restored after data is obtained from a traffic information platform. Therefore, an application scene of the method for processing the identity information proposed in the disclosure is not limited, and may be applied to any business scene.

At block S102, a relationship graph corresponding to each information source is established based on at least one first association relationship obtained from each information source.

The relationship graph refers to a graph for describing all identity relationships in the information sources.

In embodiments of the disclosure, after the first association relationships between the identities and the entity objects are obtained from the multiple information sources, there are a variety of first association relationships between the identities and the entity objects obtained from different information sources. For example, the first association relationship may be an association relationship between persons, an association relationship between a things, and an association relationship between a person and a thing. In addition, the association relationships between identities and entity objects obtained from respective information sources may not belong to the same type of association relationship. Therefore, the relationship graph of one information source may be established based on the first association relationships obtained from the corresponding information source.

In embodiments of the disclosure, after the first association relationships are obtained from a same information source, all the first association relationships obtained from the same information source are taken as a same graph layer to establish a relationship graph of the corresponding information source.

For example, holographic identity-related information left by a user is of various types, including information of a mobile phone (operator-related information) recorded by a base station, and Internet information (positioning information of an application (APP) on the mobile) left by the APP on the mobile phone. Further, IMSI (international mobile subscriber identity) and information of the mobile phone recorded and scanned by a check point and an electric fence may also be included. In addition, face information captured by a camera and identity card information of the user swiped at a sampling check point may also be included. In addition, vehicle information recorded by a camera at an intersection and a RFID code of an electromobile scanned at a check point may also be included.

In this case, a relationship graph may be constructed based on association relationships related to a mobile phone in the same information source. Another relationship graph may be constructed based on association relationships related to a biological feature. A relationship graph is separately constructed based on association relationships related to a vehicle. A relationship graph is constructed based on association relationships related to an account number. In this way, all the relationships in different relationship graphs may be fully merged, avoiding subsequent break of a key evidence chain due to lack of information, and a failure to obtain an abnormal analysis result.

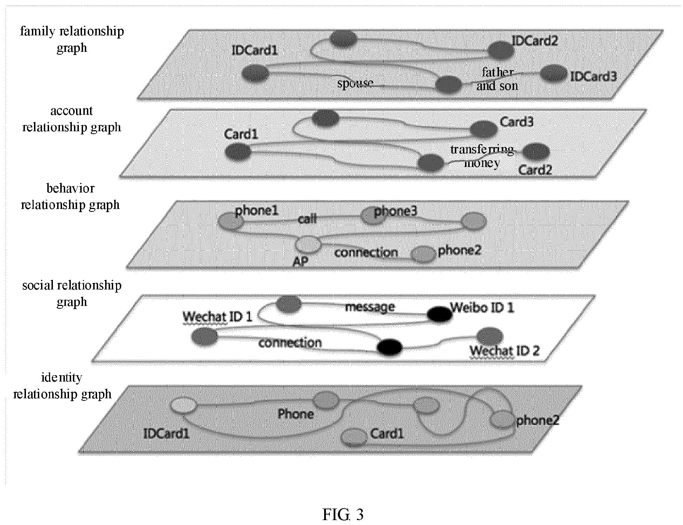

As an example, referring to FIG. 3, FIG. 3 is a schematic diagram illustrating relationship graphs corresponding to multiple information sources according to an embodiment of the disclosure. As illustrated in FIG. 3, a first association relationship obtained from a same information source corresponds to one relationship graph, such as, a family relationship graph, an account relationship graph, a behavior relationship graph, a social relationship graph, and an identity relationship graph.

At block S103, a virtual node associated with at least two entity objects in different relationship graphs is generated based on a space-time distance between respective entity objects.

The space-time distance refers to a time distance and a space distance. The virtual node refers to a fictitious node rather than a node actually exists in the relationship graph.

It may be understood that, after the relationship graph corresponding to each information source is established based on the at least one first association relationship obtained from each information source, the relationship graphs corresponding to multiple information sources may be correlated into a connected graph when there is a same node in the multiple relationship graphs.

However, after the relationship graph corresponding to each information source is established based on the at least one first association relationship obtained from each information source, there may be no common node in the multiple relationship graphs. In this case, the multiple relationship graphs cannot form a connected graph. Therefore, the virtual node may be constructed for associating different relationship graphs to form the connected graph.

In an embodiment of the disclosure, when a space-time distance between the entity objects for collecting the identity information is small, it may be considered that the identities collected by the entity objects are the same user identity. In this case, the virtual node associated with respective entity objects in different relationship graphs may be generated based on the space-time distance between respective entity objects.

For example, a camera check point captures license plate information and establishes a corresponding relationship graph, while a face check point captures face information and establishes a corresponding relationship graph. Since there is no common node between the two relationship graphs, a connected graph may not be formed. In this case, a virtual node associated with the camera check point and the face check point in the two relational graphs may be generated based on a time-space distance between the camera check point and the face check point when respectively collecting information.

At block S104, a second association relationship between identities involved in different relationship graphs is determined based on the relationship graphs associated with the virtual node.

In this embodiment, when there is no common node in the relationship graphs corresponding to multiple information sources, the second association relationship between the identities may be determined based on the relationship graphs associated with the virtual node after the virtual node associated with the at least two entity objects in different relationship graphs is generated based on the space-time distance between respective entity objects.

Continue with the example illustrated at block S103, after the virtual node associated with the camera check point and the face check point in the two relationship graphs is generated based on the time-space distance corresponding to the camera check point and the face check point when the information is collected, the second association relationship between the identities involved in different relationship graphs may be determined based on the two relationship graphs associated with the generated virtual node. For example, the license plate information captured by the camera check point and the face information captured by the face check point may belong to the identity information of one user, so the license plate information may be associated with the face information.

With the method for processing the identity information according to embodiments of the present disclosure, the first association relationships between the identities and the entity objects are obtained from the multiple information sources. The relationship graph corresponding to each information source is established based on the at least one first association relationship obtained from each information source. The virtual node associated with the at least two entity objects in different relationship graphs is generated based on the space-time distance between respective entity objects. The second association relationship between the identities involved in different relationship graphs is determined based on the relationship graphs associated with the virtual node. In this way, the relationship graphs corresponding to respective information sources are associated by the virtual node, so that the identities involved in different relationship graphs may be associated, which not only improves the accuracy of merging the identities, but also may be applied to any scene, thereby avoiding the problem of limited application range of the existing method for merging the identities.

On the basis of the above embodiments, the disclosure provides another method for processing identity information. Detailed implementation may refer to Embodiment two.

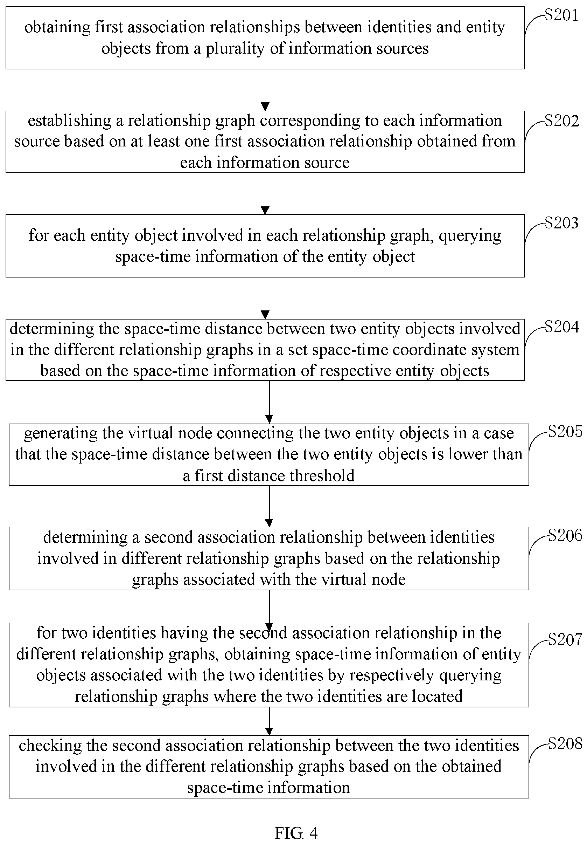

FIG. 4 is a flow chart illustrating a method for processing identity information according to Embodiment two of the disclosure.

As illustrated in FIG. 4, the method for processing the identity information may include the following.

At block S201, first association relationships between identities and entity objects are obtained from multiple information sources.

At block S202, a relationship graph corresponding to each information source is established based on at least one first association relationship obtained from each information source.

In embodiments of the disclosure, the implementation at blocks S201 and S202 may refer to the implementation at blocks S101 and S102, which is not elaborated here.

At block S203, for each entity object involved in each relationship graph, space-time information of the entity object is queried.

The space-time information is configured to indicate a time point and a spatial location of the entity object when the entity object collects an identity associated with the entity object.

In embodiments of the disclosure, after the relationship graph corresponding to the information source is established based on the first association relationship obtained from each information source, the entity objects, such as a base station, and a camera, involved in each relationship graph may be determined. Then, the space-time information of the determined entity object is queried.

It may be understood that, each entity object has a corresponding collection time point and a spatial location of the entity object when collecting the identity associated with the entity object. The spatial location may refer to a latitude and a longitude of the entity object.

For example, the camera may determine a latitude and a longitude of the camera and a time point at which the camera collects the vehicle information when collecting vehicle information, thereby obtaining the space-time information when the entity object is the camera.

At block S204, the space-time distance between two entity objects involved in the different relationship graphs in a set space-time coordinate system is determined based on the space-time information of respective entity objects.

The space-time coordinate system refers to a coordinate system about time points and space locations. For example, the space-time coordinate system may refer to a longitude-latitude-time coordinate system. For example, x axis represents a longitude of a location where the entity object is located, y axis represents a latitude of the location where the entity object is located, and z axis represents a time point when the entity object collects the identity associated with the entity object. Of course, attributes represented by the x, y and z axes may also be interchanged, which are not limited here.

In embodiments of the disclosure, after the relationship graph corresponding to each information source is established based on the at least one first association relationship obtained from each information source, different relationship graphs may be mapped to the set space-time coordinate system based on the space-time information of each entity object in the relationship graph.

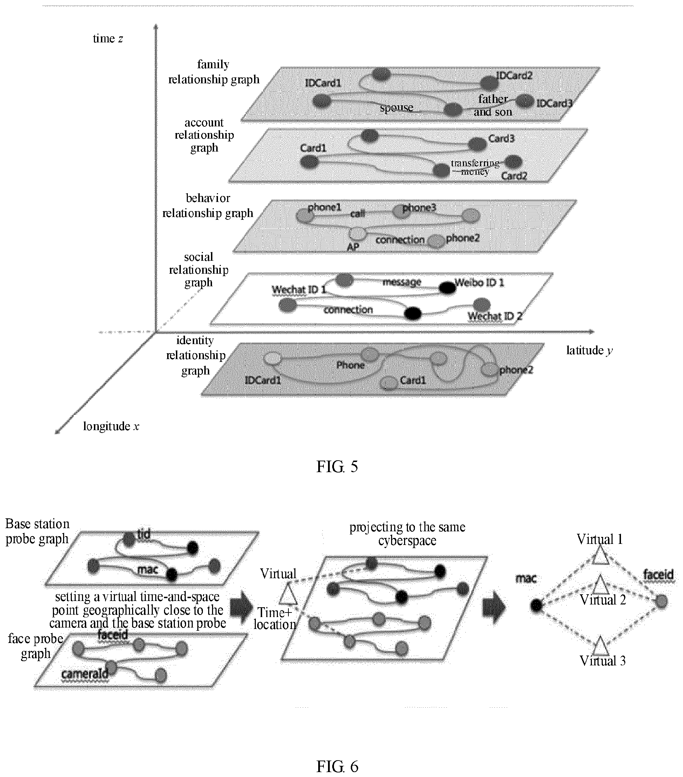

For example, in Embodiment one, after the relationship graphs corresponding to the multiple information sources illustrated in FIG. 3 are established, the relationship graphs in FIG. 3 may be mapped to the set time-space coordinate system, and a mapped result is illustrated in FIG. 5.

It should be noted that, there may be no time-space information in some first association relationships between the identities and the entity objects when the relationship graphs are mapped to the set time-space coordinate system. In this case, time information of a node or an associated node may be used as the time-space information of the entity object, such that the first association relationship between identities and entity objects may be better represented.

In embodiments of the disclosure, the relationship graphs corresponding to the multiple information sources are mapped into the set space-time coordinate system, the space-time information of the entity objects involved in each relationship graph may be determined, and then the space-time distance between two entity objects involved in different relationship graphs in the set space-time coordinate system may be determined based on the space-time information of each entity object.

At block S205, the virtual node connecting the two entity objects is generated in a case that the space-time distance between the two entity objects is lower than a first distance threshold.

The first distance threshold is preset based on attributes of respective entity objects. For example, an attribute of an entity object may include a collection capability of a collection device, a capturing range of a camera, a signal coverage range of a base station, and so on.

In embodiments of the disclosure, after the space-time distance between two entity objects involved in different relationship graphs in the set space-time coordinate system is determined based on the space-time information of each entity object, it is determined whether the space-time distance between the two entity objects is lower than the first distance threshold.

It may be understood that, the space-time distance between two entity objects being lower than the first distance threshold means that the identities having an association relationship and respectively collected by the two entity objects are the same identity. In this case, the virtual node connecting the two entity objects may be generated, to connect different relationship graphs corresponding to the two entity objects based on the virtual node.

For example, as illustrated in FIG. 6, after a graph corresponding to identities collected by a base station probe and a graph corresponding to identities collected by a face probe are established, there is no common node between the two graphs. In this case, a time-space distance between the base station probe and the face probe may be calculated. It may be determined that mobile phone information collected by the base station probe and face information detected by the face probe belong to the same user when it is determined that the time-space distance between the base station probe and the face probe is lower than the first distance threshold. Furthermore, a virtual node may be generated at a geographical location close to the base station probe and the face probe. Therefore, two different relationship graphs may be connected through the virtual node, thereby improving the accuracy of merging the identities.

In a possible case, multiple virtual nodes connecting at least two entity objects in different relationship graphs may be generated based on the space-time distance between respective entity objects. In this case, the multiple virtual nodes may be merged to reduce the computation.

As a possible implementation, when the multiple virtual nodes are generated, the space-time information of each virtual node is obtained based on the space-time information of the entity objects connected with the corresponding virtual node. Then, the space-time distances between respective virtual nodes in the set space-time coordinate system is determined based on the space-time information of each virtual node, to merge the virtual nodes whose space-time distance in the space-time coordinate system is lower than a second distance threshold. The second distance threshold is lower than the first distance threshold. The second distance threshold may also be preset based on the attribute of respective entity objects.

In this way, the virtual nodes with the space-time information lower than the second distance threshold are merged, thereby the virtual nodes are screened based on the space-time distance between the virtual nodes, thus, reducing the computation amount when respective relationship graphs are associated based on the virtual node.

At block S206, a second association relationship between identities involved in different relationship graphs is determined based on the relationship graphs associated with the virtual node.

In embodiments of the disclosure, the implementation at block S206 may refer to the implementation at block S104, which is not elaborated.

At block S207, for two identities having the second association relationship in the different relationship graphs, space-time information of entity objects associated with the two identities is obtained by respectively querying relationship graphs where the two identities are located.

In embodiments of the disclosure, after the second association relationship between identities involved in different relationship graphs is determined, the relationship graphs where the corresponding two identities are located are queried respectively, and the entity objects associated with each involved identity are determined based on the first association relationships between the involved identities and the entity objects in the relationship graphs. Furthermore, the space-time information of each entity object associated with the identity is obtained based on the determined entity objects.

At block S208, the second association relationship between the two identities involved in the different relationship graphs is checked based on the obtained space-time information.

It should to be explained that, after the relationship graphs are associated based on the virtual node, and after the second association relationship between the identities involved in different relationship graphs are determined, there may be a condition where a second association relationship between two identities in different relationship graphs is incorrectly associated. Therefore, the second association relationship between the two identities in different relationship graphs may be checked to improve the accuracy rate of identity information after merging cross-media identities.

As a possible implementation, after the space-time information of the entity objects associated with two identities is queried, the second association relationship between the two identities in different relationship graphs may be verified by using a specific business scene.

As an example, track information corresponding to the merged cross-media identity may be restored based on the specific business scene, and it is determined whether there is an abnormal node by using the track information. For example, a user is located at place A at T1 time point and located at place B at T2 time point, and a distance between the place A and the place B is D(A, B). A speed of the user from the place A to the place B is obtained as D(A, B)/(T2-T1). When the speed is far larger than a normal value, it may be determined that at least one of the place A and the place B is wrong. In this way, by checking the second association relationship between the two identities in different relationship graphs based on the queried space-time information, a node which is obviously out of a business logic (for example, the speed far larger than the normal level) may be filtered out, thereby, real cross-media identities merging is realized.

As a possible implementation, after the space-time information of the entity objects associated with the two identities is queried, the second association relationship between the two identities in different relationship graphs may also be checked based on an attribute of each entity object.

The attribute of the entity object may include an accuracy of a collection capability of a collection device, a collection range of the collection device, and so on.

With the method for processing the identity information according to embodiments of the disclosure, the space-time distance between the two entity objects in different relationship graphs in the set time coordinate system is determined based on the space-time information of the entity objects in respective relationship graphs, to generate the virtual node connecting the two entity objects. In this way, two different relationship graphs may be associated based on the generated virtual node, thereby avoiding the loss of the identity information caused by incomplete data information. By checking the second association relationship between the two identities in different relationship graphs, an interference node may be filtered out, which facilitates improving the accuracy of merging the cross-media identities.

On the basis of the above embodiments, the disclosure further provides a method for processing identity information. The detailed implementation may refer to Embodiment three.

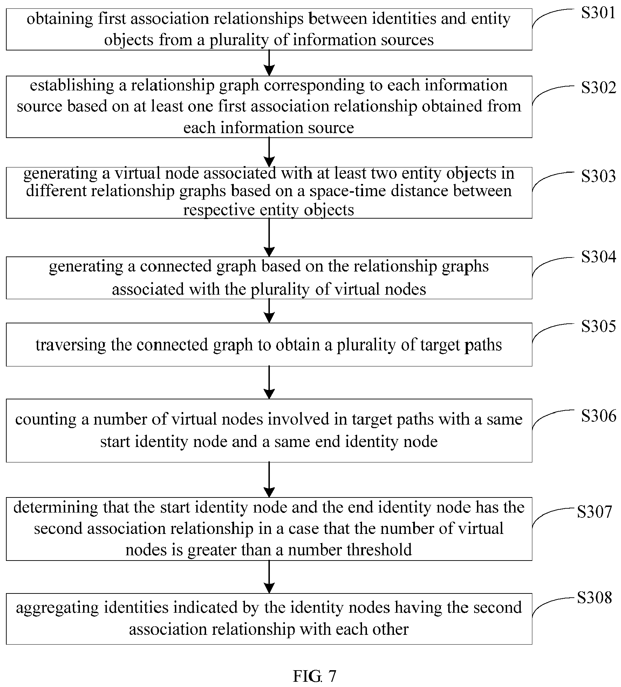

FIG. 7 is a flow chart illustrating a method for processing identity information according to Embodiment three of the disclosure.

As illustrated in FIG. 7, the method for processing the identity information may include the following.

At block S301, first association relationships between identities and entity objects are obtained from multiple information sources.

At block S302, a relationship graph corresponding to each information source is established based on at least one first association relationship obtained from each information source.

At block S303, a virtual node associated with at least two entity objects in different relationship graphs is generated based on a space-time distance between respective entity objects.

In an embodiment of the disclosure, the detailed implementation at blocks S301-S303 may refer to the implementation at blocks S101-S103, which is not elaborated here.

At block S304, a connected graph is generated based on the relationship graphs associated with multiple virtual nodes.

The connected graph includes multiple identity nodes, the multiple virtual nodes and multiple edges. An identity node is configured to indicate an identity. An edge is configured to connect a virtual node and an identity node, indicating that the virtual node has a direct or indirect association with the identity connected to the virtual node.

The connected graph means that there is a path between any two nodes to connect the two nodes.

In an embodiment of the disclosure, after the virtual node associated with the at least two entity objects in different relationship graphs is generated based on the space-time distance between respective entity objects, the connected graph is generated based on the relationship graphs associated with the multiple virtual nodes.

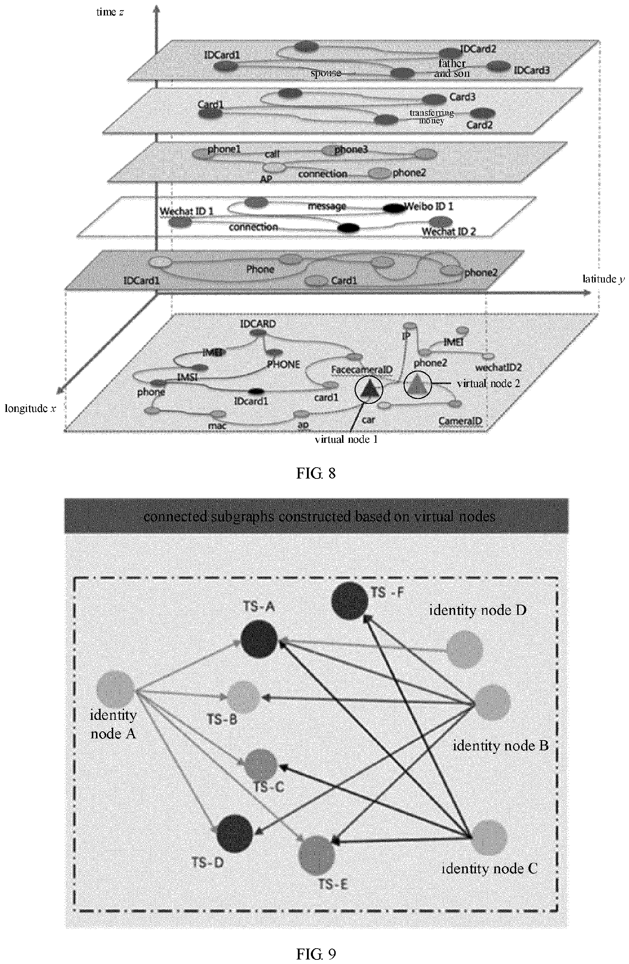

As an example, FIG. 8 illustrates a connected graph obtained by associating different relationship graphs based on a virtual node 1 and a virtual node 2.

At block S305, the connected graph is traversed to obtain multiple target paths.

Each target path takes different identity nodes as a start point and an end point, and passes through at least one of the multiple virtual nodes.

As a possible implementation, a breadth-first search with a depth of two degrees may be performed on the connected graph to obtain the multiple target paths. The breadth-first search is a traversal strategy for the connected graph. That is to say, the breadth-first search with the depth of two degrees is performed by taking different identity nodes as a start point. In this way, a step size of each obtained path is two, each path merely contains three nodes, both a start point and an end point of the path are identity nodes, and a middle of the path is a virtual node. Thus, a path length is shortened, and the connection between a start identity point and an end identity point may be more direct, thereby improving the accuracy of filtering the association relationship between the identities.

For example, referring to FIG. 9, FIG. 9 is a schematic diagram illustrating a connected graph according to an embodiment of the disclosure. The breadth-first search with the depth of two degrees is performed on the connected graph illustrated in FIG. 9. TS-A in FIG. 9 represents a virtual node A. Similarly, TS-B, TS-C, TS-D, TS-E and TS-F respectively represent virtual nodes B, C, D, E and F. The identity node A is taken as a start point, at least one virtual node is passed through, and an identity node is taken as an end point, to obtain multiple target paths. For example, the obtained paths may include: identity node A - TS-A - identity node D, identity node A - TS-B - identity node B, identity node A - TS-C -identity node C, identity node A - TS-D - identity node B, identity node A - TS-E - identity node B, identity node A - TS-E - identity node C, identity node A - TS-A - identity node B, identity node A - TS-A - identity node C.

At block S306, a number of virtual nodes involved in target paths with a same start identity node and a same end identity node is counted.

In embodiments of the disclosure, the number of virtual nodes involved in the multiple target paths with the same start identity and the same end identity node is counted after the multiple target paths is obtained by traversing the connected graph.

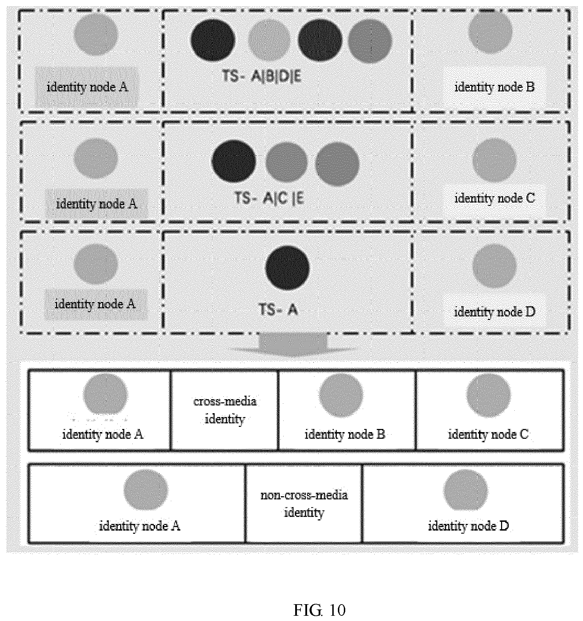

Continuing with the example illustrated in FIG. 9, the number of virtual nodes involved in the target paths with the same start identity and the same end identity node is counted after the multiple target paths is obtained by traversing the connected graph. When the start identity node of the target path is identity node A and the end identity node is identity node B, it is counted that four virtual nodes are involved, which are TS-A, TS-B, TS-D and TS-E. When the start identity node of the target path is identity node A and the end identity node is identity node C, it is counted that three virtual nodes are involved, which are TS-A, TS-C and TS-E. When the start identity node of the target path is identity node A and the end identity node is identity node D, it is counted that one virtual node is involved, which is TS-A. A specific counting result may be referred in FIG. 10.

At block S307, it is determined that the start identity node and the end identity node have the second association relationship in a case that the number of virtual nodes is greater than a number threshold.

The number threshold may be a user-defined preset value or a value set based on a logic of an application scene, which is not limited here. For example, the number threshold may be set to 2.

In an embodiment of the disclosure, after the number of the virtual nodes involved in the target paths with the same start identity node and the same end identity node is counted, the number of the virtual nodes is compared with the number threshold to determine whether the start identity node and the end identity node have the second association relationship.

In a possible case, when the counted number of the virtual nodes involved in the target paths with the same start identity node and the same end identity node is greater than the number threshold, it is determined that there is an association relationship between the start identity node and the end identity node.

It may be understood that, when the target paths having the same start identity node and the same end identity node are counted, and the number of virtual nodes involved is greater than the number threshold, it means that the start identity node and the end identity node are connected to the same virtual node for multiple times. It may be considered that the start identity node and the end identity node have a close time-space relationship, i.e., the start identity node and the end identity node may be the same cross-media identity.

For example, referring to an example illustrated in FIG. 10, when the number threshold is set to 2, and it is determined that the start identity node of the target path is identity node A, the end identity node is identity node B, and the number of virtual nodes involved is 4. When it is determined that the start identity node of the target path is identity node A and the end identity node is identity node C, the number of involved virtual nodes is 3. Since both of the two numbers of involved virtual nodes are greater than the number threshold, it may be determined that there is an association relationship between the start identity node A, the end identity node B and the identity node C.

In another possible case, when the counted number of virtual nodes involved in the target paths with the same start identity node and the same end identity node is not greater than the number threshold, it is determined that there is no association relationship between the start identity node and the end identity node.

For example, referring to the example illustrated in FIG. 10, the number threshold is set to two. When it is determined that the start identity node of the target path is identity node A and the end identity node is identity node D, the number of involved virtual nodes is one. Since the number of virtual nodes is lower than the number threshold, it may be determined that there is no association relationship between the start identity node A and the end identity node D. That is to say, the start identity node A and the end identity node D do not belong to the cross-media identity, that is, the identity node A and the identity node D are not the same user identity.

At block S308, identities indicated by the identity nodes having the second association relationship with each other are aggregated.

In an embodiment of the disclosure, after it is determined that the start identity node and the end identity node have the second association relationship based on the number of involved virtual nodes, the identities indicated by the identity nodes having the second association relationship with each other may be aggregated. In this way, the integration of the cross-media identities is implemented by aggregating the identities indicated by the identity nodes.

Continuing with the example in FIG. 10, detailed description is made. The number of virtual nodes involved in the target paths with the same start identity node and the same end identity node is counted. When it is determined that the identity node A, the identity node B and the identity node C have the association relationship based on the number of virtual nodes, the identities indicated by the identity nodes A, B and C may be aggregated.

With the method for processing the identity information, after the virtual node associated with the at least two entity objects in different relationship graphs is generated based on the space-time distance between respective entity objects, the connected graph is generated based on the relationship graphs associated with the multiple virtual nodes, the connected graph is traversed to obtain the multiple target paths, the number of virtual nodes involved in the target paths with the same start identity node and the same end identity node is counted, it is determined that the start identity node and the end identity node have the second association relationship in the case that the number of virtual nodes is greater than the number threshold, and the identities indicated by the identity nodes having the second association relationship with each other are aggregated. In this way, the identity nodes are filtered based on the number of virtual nodes, and the identity nodes having the second association relationship are aggregated, such that the identities in the relationship graphs corresponding to different information sources are aggregated, and the loss of identity information is avoided.

On the basis of the above embodiments, the disclosure further provides a method for processing identity information. Detailed implementation may refer to Embodiment four.

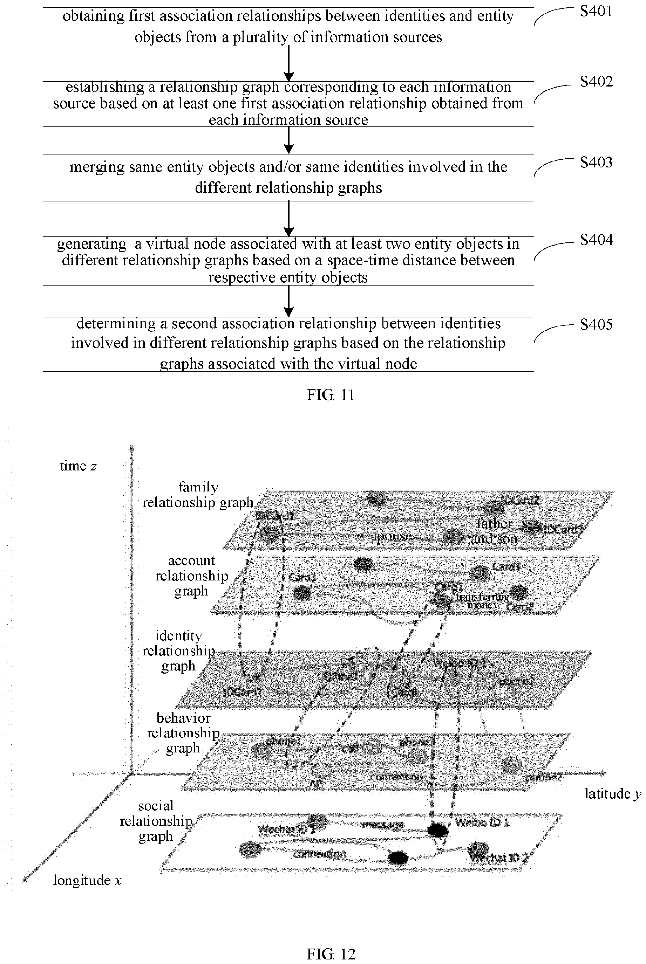

FIG. 11 is a flow chart illustrating a method for processing identity information according to Embodiment four of the disclosure.

As illustrated in FIG. 11, the method for processing the identity information may include the following.

At block S401, first association relationships between identities and entity objects are obtained from multiple information sources.

At block S402, a relationship graph corresponding to each information source is established based on at least one first association relationship obtained from each information source.

In embodiments of the disclosure, the implementation at blocks S401 and S402 may refer to the implementation at blocks S101 and S102, which is not elaborated.

At block S403, same entity objects and/or same identities involved in the different relationship graphs are merged.

In an embodiment of the disclosure, after the relationship graph corresponding to each information source is established based on the first association relationship obtained from each information source, different relationship graphs may be mapped to a set space-time coordinate system based on space-time information of each entity object in the relationship graphs. A mapped result may be referred in the example illustrated in FIG. 5.

Since different relationship graphs may have the same entity object and/or the same identity, the same entity objects and/or the same identities involved in different relationship graphs may be merged to generate a connected graph.

As an example, as illustrated in FIG. 12, the same identity exists in different relationship graphs illustrated in FIG. 12. For example, an identity IDCard1 exists in both a social relationship graph and an identity relationship graph, and an identity Card1 exists in both an account relationship graph and the identity relationship graph. Therefore, the identity nodes in the relationship graphs having the same identity may be merged, and all the relationship graphs may be projected on a same layer plane, thereby constructing a relatively complete connected graph.

At block S404, a virtual node associated with at least two entity objects in different relationship graphs is generated based on a space-time distance between respective entity objects.

In an embodiment of the disclosure, after the same entity objects and/or the same identities in all the relationship graphs are merged, there may inevitably be some isolated subgraphs. In this case, the virtual node associated with the at least two entity objects in different relationship graphs may be generated based on the space-time distance between each entity object.

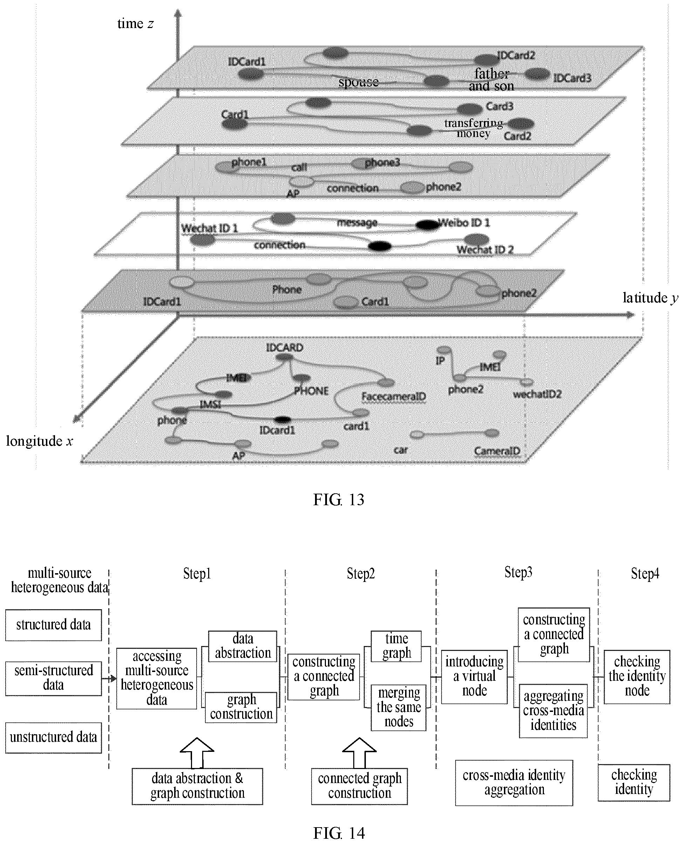

As an example, as illustrated in FIG. 13, after the same entity objects and/or the same identities involved in different relationship graphs are merged, all the relationship graphs are projected on a same layer plane, and there are still some isolated subgraphs. In this case, multiple virtual nodes are generated, and a connected graph is generated based on the respective relationship graphs associated with the multiple virtual nodes.

In an embodiment of the disclosure, a method for generating the virtual node may refer to the implementation in the above embodiment, which is elaborated here.

At block S405, a second association relationship between identities involved in different relationship graphs is determined based on the relationship graphs associated with the virtual node.

In an embodiment of the disclosure, the implementation at block S405 may refer to the implementation at block S104 in the above embodiment, which is not elaborated here.

With the method for processing the identify information according to embodiments of the disclosure, the first association relationships between the identities and the entity objects are obtained from the multiple information sources. The relationship graph corresponding to each information source is established based on the at least one first association relationship obtained from each information source. The same entity objects and/or same identities involved in the different relationship graphs are merged. The virtual node associated with the at least two entity objects in different relationship graphs is generated based on the space-time distance between respective entity objects. The second association relationship between identities involved in different relationship graphs is determined based on the relationship graphs associated with the virtual node. In this way, the relationship graphs with the common node are merged, and the virtual node is introduced to associate the relationship graphs without the common node, a complete connected graph may be constructed, avoiding the case of identity information loss due to incomplete connectivity of data information during the cross-media identities merging.

On the basis of the above embodiments, referring to FIG. 14, FIG. 14 is a flow chart illustrating a method for processing identity information according to Embodiment five of the disclosure.

As illustrated in FIG. 14, the detailed implementation may be as following. The data obtained from the multiple information sources may be various, including structured data, unstructured data, semi-structured data, and various multimodal data such as a text, a video, an audio, and an image. At Step 1, in order to construct a unified and generalizable system for mining and analyzing a large-scale dynamic relationship, abstract processing may be performed on the data obtained from the multiple information sources to obtain first association relationships between identities and entity objects. A relationship graph corresponding to each information source may be established based on the first association relationships obtained from each information source. At Step 2, same entity objects and/or same identities involved in different relationship graphs are merged to construct a connected graph. At Step 3, a virtual node is introduced, respective relationship graphs are associated based on the virtual node, and the identities indicated by the identity nodes having an association relationship with each other are merged. At Step 4, the association relationship between two identities in different relationship graphs is checked by using a business scene or an attribute information of an entity object, and illogical identity nodes are filtered out, thereby implementing the real cross-media identities merging.

To achieve the above embodiments, the disclosure provides an apparatus for processing identity information.

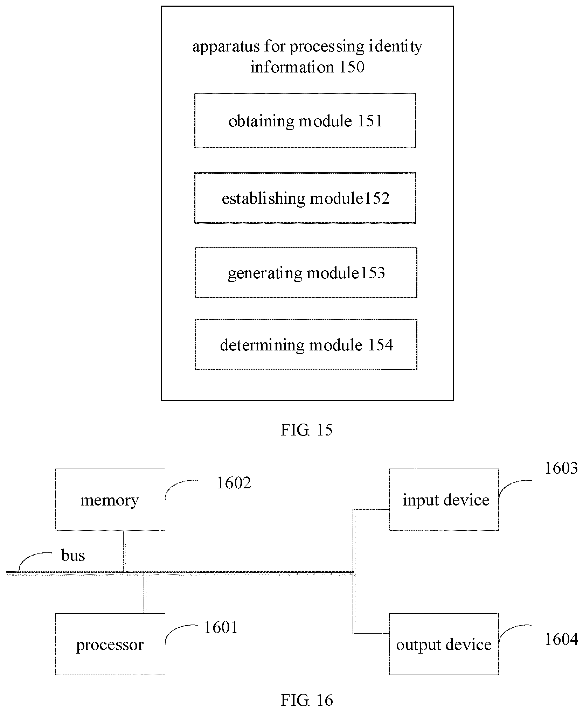

FIG. 15 is a block diagram illustrating an apparatus for processing identity information according to Embodiment six of the disclosure.

As illustrated in FIG. 15, the apparatus 150 for processing the identity information may include: an obtaining module 151, an establishing module 152, a generating module 153, and a determining module 154.

The obtaining module 151 is configured to obtain first association relationships between identities and entity objects from multiple information sources.

The establishing module 152 is configured to establish a relationship graph corresponding to each information source based on at least one first association relationship obtained from each information source.

The generating module 153 is configured to generate a virtual node associated with at least two entity objects in different relationship graphs based on a space-time distance between respective entity objects.

The determining module 154 is configured to determine a second association relationship between identities involved in different relationship graphs based on the relationship graphs associated with the virtual node.

As a possible implementation, the generating module 153 may include: a querying unit, a first determining unit, and a first generating unit.

The querying unit is configured to, for each entity object involved in each relationship graph, query space-time information of the entity object. The space-time information is configured to indicate a time point and a spatial location of the entity object when the entity object collects an identity associated with the entity object.

The first determining unit is configured to determine the space-time distance between two entity objects involved in the different relationship graphs in a set space-time coordinate system based on the space-time information of respective entity objects.

The first generating unit is configured to generate the virtual node connecting the two entity objects in a case that the space-time distance between the two entity objects is lower than a first distance threshold.

As another possible implementation, the generating module 153 may also include: a second generating unit and a merging unit.

The second generating unit is configured to obtain space-time information of each virtual node based on the space-time information of the entity objects connected by each virtual node in a case that multiple virtual nodes are generated.

The merging unit is configured to merge virtual nodes with a space-time distance lower than a second distance threshold in the space-time coordinate system based on the space-time information of each virtual node, the second distance threshold being lower than the first distance threshold.

As another possible implementation, the generating module 153 may also include: a third generating unit and a checking unit.

The third generating unit is configured to, for two identities having the second association relationship in the different relationship graphs, obtain space-time information of entity objects associated with the two identities by respectively query relationship graphs where the two identities are located.

The checking unit is configured to check the second association relationship between the two identities involved in the different relationship graphs based on the obtained space-time information.

As another possible implementation, multiple virtual nodes are generated. The determining module 154 includes: a fourth generating unit, a traversing unit, a counting unit, and a second determining unit.

The fourth generating unit is configured to generate a connected graph the relationship graphs associated with multiple virtual nodes. The connected graph includes multiple identity nodes, the multiple virtual nodes and multiple edges; an identity node is configured to indicate an identity; an edge is configured to connect a virtual node and an identity node, indicating that the virtual node has a direct or indirect association with the identity connected to the virtual node.

The traversing unit is configured to traverse the connected graph to obtain multiple target paths. Each target path takes different identity nodes as a start point and an end point, and passes through at least one of the multiple virtual nodes.

The counting unit is configured to count a number of virtual nodes involved in target paths with a same start identity node and a same end identity node.

The second determining unit is configured to determine that the start identity node and the end identity node have the second association relationship in a case that the number of virtual nodes is greater than a number threshold.

As another possible implementation, the determining module 154 may also include: an aggregating unit, configured to aggregate identities indicated by the identity nodes having the second association relationship with each other.

As another possible implementation, the traversing unit is configured to: obtain the multiple target paths by performing a breadth-first search with a depth of two degrees on the connected graph.

As another possible implementation, the apparatus for processing the identify information may also include a merging module, configured to merge same entity objects and/or same identities involved in the different relationship graphs.

It should be noted that the above description of embodiments of the method for processing the identity information is also applicable to the apparatus for processing the identity information in this embodiment, which is not elaborated herein.

With the apparatus for processing the identify information according to embodiments of the present disclosure, the first association relationships between the identities and the entity objects are obtained from the multiple information sources. The relationship graph corresponding to each information source is established based on the at least one first association relationship obtained from each information source. The virtual node associated with the at least two entity objects in different relationship graphs is generated based on the space-time distance between respective entity objects. The second association relationship between the identities involved in different relationship graphs is determined based on the relationship graphs associated with the virtual node. In this way, the relationship graphs corresponding to respective information sources are associated by the virtual node, so that the identities involved in different relationship graphs may be associated, which not only improves the accuracy of merging the identities, but also may be applied to any scene, thereby avoiding the problem that an application range of the existing method for merging the identities is limited.

According to embodiments of the disclosure, the disclosure also provides an electronic device and a readable storage medium.

As illustrated in FIG. 16, FIG. 16 is a block diagram illustrating an electronic device capable of implementing a method for processing identity information according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 16, the electronic device includes: one or more processors 1601, a memory 1602, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In

FIG. 16, a processor 1601 is taken as an example.

The memory 1602 is a non-transitory computer readable storage medium provided by the disclosure. The memory is configured to store instructions executable by at least one processor, to enable the at least one processor to execute the method for processing the identity information provided by the disclosure. The non-transitory computer readable storage medium provided by the disclosure is configured to store computer instructions. The computer instructions are configured to enable a computer to execute the method for processing the identity information provided by the disclosure.

As the non-transitory computer readable storage medium, the memory 1602 may be configured to store non-transitory software programs, non-transitory computer executable programs and modules, such as program instructions/module (such as the obtaining module 151, the establishing module 152, the generating module 153, and the determining module 154 illustrated in FIG. 15) corresponding to the method for processing the identity information according to embodiments of the disclosure. The processor 1601 is configured to execute various functional applications and data processing of the server by operating non-transitory software programs, instructions and modules stored in the memory 1602, that is, implements the method for processing the identity information according to the above method embodiments.

The memory 1602 may include a storage program region and a storage data region. The storage program region may store an application required by an operating system and at least one function. The storage data region may store data created according to predicted usage of the electronic device based on the semantic representation. In addition, the memory 1602 may include a high-speed random access memory, and may also include a non-transitory memory, such as at least one disk memory device, a flash memory device, or other non-transitory solid-state memory device. In some embodiments, the memory 1602 may optionally include memories remotely located to the processor 1601, and these remote memories may be connected to the electronic device via a network. Examples of the above network include, but are not limited to, an Internet, an intranet, a local area network, a mobile communication network and combinations thereof.

The electronic device capable of implementing the method for processing the identity information may also include: an input device 1603 and an output device 1604. The processor 1601, the memory 1602, the input device 1603, and the output device 1604 may be connected via a bus or in other means. In FIG. 16, the bus is taken as an example.

The input device 1603 may receive inputted digital or character information, and generate key signal input related to user setting and function control of the electronic device capable of implementing the method for processing the identity information, such as a touch screen, a keypad, a mouse, a track pad, a touch pad, an indicator stick, one or more mouse buttons, a trackball, a joystick and other input device. The output device 1604 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

With the technical solution according to embodiments of the disclosure, the first association relationships between the identities and the entity objects are obtained from the multiple information sources. The relationship graph corresponding to each information source is established based on the at least one first association relationship obtained from each information source. The virtual node associated with the at least two entity objects in different relationship graphs is generated based on the space-time distance between respective entity objects. The second association relationship between the identities involved in different relationship graphs is determined based on the relationship graphs associated with the virtual node. In this way, the relationship graphs corresponding to respective information sources are associated by the virtual node, so that the identities involved in different relationship graphs may be associated, which not only improves the accuracy of merging the identities, but also may be applied to any scene, thereby avoiding the problem that an application range of the existing method for merging the identities is limited.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the spirit and the principle of the disclosure shall be included in the protection scope of disclosure.

## Claims

1. A method for processing identity information, comprising:
obtaining (101, 201, 301, 401) first association relationships between identities and entity objects from a plurality of information sources;
establishing (102, 202, 302, 402) a relationship graph corresponding to each information source based on at least one first association relationship obtained from each information source;
generating (103, 303, 404) a virtual node associated with at least two entity objects in different relationship graphs based on a space-time distance between respective entity objects; and
determining (104, 206, 405) a second association relationship between identities involved in different relationship graphs based on the relationship graphs associated with the virtual node.

2. The method of claim 1, wherein generating (103) the virtual node associated with the at least two entity objects in different relationship graphs based on the space-time distance between respective entity objects comprises:
for each entity object involved in each relationship graph, querying (203) space-time information of the entity object, wherein, the space-time information is configured to indicate a time point and a spatial location of the entity object when the entity object collects an identity associated with the entity object;
determining (204) the space-time distance between two entity objects involved in the different relationship graphs in a set space-time coordinate system based on the space-time information of respective entity objects; and
generating (205) the virtual node connecting the two entity objects in a case that the space-time distance between the two entity objects is lower than a first distance threshold.

3. The method of claim 2, after generating (103) the virtual node associated with the at least two entity objects in different relationship graphs based on the space-time distance between respective entity objects, further comprising:
obtaining space-time information of each virtual node based on the space-time information of the entity objects connected by each virtual node in a case that a plurality of virtual nodes are generated; and
merging virtual nodes with a space-time distance lower than a second distance threshold in the space-time coordinate system based on the space-time information of each virtual node, the second distance threshold being lower than the first distance threshold.

4. The method of claim 2, after determining (104, 206, 405) the second association relationship between the identities involved in different relationship graphs based on the relationship graphs associated with the virtual node, further comprising:
for two identities having the second association relationship in the different relationship graphs, obtaining (207) space-time information of entity objects associated with the two identities by respectively querying relationship graphs where the two identities are located; and
checking (208) the second association relationship between the two identities involved in the different relationship graphs based on the obtained space-time information.

5. The method of any of claims 1 to 4, wherein a plurality of virtual nodes are generated, and determining (104, 206, 405) the second association relationship between the identities involved in different relationship graphs based on the relationship graphs associated with the virtual node comprises:
generating (304) a connected graph based on the relationship graphs associated with the plurality of virtual nodes, wherein the connected graph comprises a plurality of identity nodes, the plurality of virtual nodes and a plurality of edges; an identity node is configured to indicate an identity; an edge is configured to connect a virtual node and an identity node, indicating that the virtual node has a direct or indirect association with the identity connected to the virtual node;
traversing (305) the connected graph to obtain a plurality of target paths, wherein each target path takes different identity nodes as a start point and an end point, and passes through at least one of the plurality of virtual nodes;
counting (306) a number of virtual nodes involved in target paths with a same start identity node and a same end identity node; and
determining (307) that the start identity node and the end identity node have the second association relationship in a case that the number of virtual nodes is greater than a number threshold.

6. The method of claim 5, after determining (307) that the start identity node and the end identity node has the second association relationship in the case that the number of virtual nodes is greater than the number threshold, further comprising:
aggregating (308) identities indicated by the identity nodes having the second association relationship with each other.

7. The method of claim 5 or 6, wherein traversing the connected graph to obtain the plurality of target paths comprises:
obtaining the plurality of target paths by performing a breadth-first search with a depth of two degrees on the connected graph.

8. The method of any of claims 1-7, after establishing (102, 202, 302, 402) the relationship graph corresponding to each information source based on the first association relationship obtained from each information source, further comprising:
merging (404) same entity objects and/or same identities involved in the different relationship graphs.

9. An apparatus for processing identity information (150), comprising:
an obtaining module (151), configured to obtain first association relationships between identities and entity objects from a plurality of information sources;
an establishing module (152), configured to establish a relationship graph corresponding to each information source based on at least one first association relationship obtained from each information source;
a generating module (153), configured to generate a virtual node associated with at least two entity objects in different relationship graphs based on a space-time distance between respective entity objects; and
a determining module (154), configured to determine a second association relationship between identities involved in different relationship graphs based on the relationship graphs associated with the virtual node.

10. The apparatus of claim 9, wherein the generating module (153) comprises:
a querying unit, configured to, for each entity object involved in each relationship graph, query space-time information of the entity object, wherein, the space-time information is configured to indicate a time point and a spatial location of the entity object when the entity object collects an identity associated with the entity object;
a first determining unit, configured to determine the space-time distance between two entity objects involved in the different relationship graphs in a set space-time coordinate system based on the space-time information of respective entity objects; and
a first generating unit, configured to generate the virtual node connecting the two entity objects in a case that the space-time distance between the two entity objects is lower than a first distance threshold.

11. The apparatus of claim 10, wherein the generating module (153) comprises:
a second generating unit, configured to obtain space-time information of each virtual node based on the space-time information of the entity objects connected by each virtual node in a case that a plurality of virtual nodes are generated; and
a merging unit, configured to merge virtual nodes with a space-time distance lower than a second distance threshold in the space-time coordinate system based on the space-time information of each virtual node, the second distance threshold being lower than the first distance threshold.

12. The apparatus of claim 10, wherein the generating module (153) comprises:
a third generating unit, configured to, for two identities having the second association relationship in the different relationship graphs, obtain space-time information of entity objects associated with the two identities by respectively query relationship graphs where the two identities are located; and
a checking unit, configured to check the second association relationship between the two identities involved in the different relationship graphs based on the obtained space-time information.

13. An electronic device, comprising:
at least one processor; and
a memory, communicatively coupled to the at least one processor,
the memory having instructions executable by the at least one processor stored thereon that, when executed by the at least one processor, cause the at least one processor to implement the method for processing the identity information according to any one of claims 1 to 8.

14. A non-transitory computer readable storage medium having computer instructions stored thereon, wherein the computer instructions are configured to cause a computer to execute the method for processing the identity information according to any one of claims 1 to 8.

15. A computer program product, having computer instructions stored thereon, wherein when the computer instructions are executed by a processor, the processor is caused to implement the method for processing the identity information according to any one of claims 1 to 8.
